# EUROPEAN PATENT APPLICATION

(11) **EP 3 747 749 A1**
(43) Date of publication of application: **09.12.2020**
(21) Application number: 19178367.9
(22) Date of filing: 05.06.2019
(51) Int. Cl.: B62K 5/06, B62K 7/04, B62M 6/40, B62M 6/65

(54) **TRICYCLE**

(71) Applicant: Katholieke Universiteit Leuven KU Leuven Research & Development, 3000 Leuven (BE)
(72) Inventor: Juwet, Marc, 9850 Deinze (BE)

(57) **Abstract**

An electric tricycle (1) is disclosed. The tricycle (1) comprises a front section (2), a rear section (3), and a coupling device (4). The front section (2) comprises a steerable front wheel (5) and a seat (7). The rear section (3) comprises a loading area (11) and first and second rear wheels (9, 10) at least partially supporting the loading area (11). The coupling device (4) couples the front section (2) to the rear section (3) and allows rotation of the front section (2) relative to the rear section (3). The rear section (3) comprises a first motor for driving the first rear wheel (9, 10) and a second, different motor for driving the second rear wheel (9, 10).

## Description

### Field of the invention

The present invention relates to a tricycle, more specifically an electric tricycle with a loading area.

### Background of the invention

Cargocycles, which can also be electric, have many uses in leisure and in commerce. They can be particularly useful for "last mile" delivery, especially in cities where accessibility for vehicles is restricted. However, existing cargo bikes have multiple drawbacks.

Cycles on two wheels may tilt, especially when loading heavy cargo. Sensitivity to tilting can be reduced in designs having a lower centre of gravity; however, such designs tend to be longer than conventional cycles and can be less manoeuvrable especially in urban environments. Cycles on two wheels can have a support leg to avoid tilting but even in that case loading heavy cargo is not easy and can even be dangerous.

Cargo cycles having three wheels, also called tricycles, generally have two front wheels and a loading zone between the front wheels. Although providing a lower centre of gravity, such cycles have two major disadvantages: a voluminous load obstructs the cyclist's view, and the steering is cumbersome as the load must also be moved when steering.

Besides tricycles also bikes can have three wheels, called tribikes or trikes.CN105984537 describes a tiltable tribike having front part with a wheel, steering bar, and seat, and a rear part with a pair of rear wheels. The front and rear parts are connected such that the front part can tilt without affecting the position of the rear part. A motor mounted on the frame drives a rear wheel. The area between the rear wheels is occupied by the motor and there is no space for cargo.

### Summary of the invention

According to a first aspect of the present invention, there is provided an electric tricycle comprising a front section, a rear section, and a coupling device, the front section comprising a steerable front wheel, and a seat, and the rear section comprising a loading area and first and second rear wheels at least partially supporting the loading area;
wherein the coupling device couples the front section to the rear section and allows rotation of the front section relative to the rear section; and wherein the rear section comprises a first motor for driving the first rear wheel and a second, different motor for driving the second rear wheel.

It is an advantage of embodiments of the present invention that a tricycle can be provided which is stable while turning corners, even when loaded with cargo. By providing a coupling device which allows rotation of the front section, the front section can lean into a turn while the rear section remains stable. By providing separate motors for each wheel, the driving properties can be different for each wheel which allows to compensate for different distances travelled by each wheel on a turn.

The front section may comprise a set of pedals.

The tricycle may comprise a generator coupled to the pedals and to at least a battery and/or one of the first motor and the second motor.

The front section and the rear section may be spaced apart by the coupling device in a first direction and the axis about which the front section can rotate may be inclined with respect to the first direction.

By inclining the axis of rotation, a tricycle is provided which is more stable in a parked position.

The first and second motors may be built into the first and second rear wheels respectively.

The first and second motors may be disposed under or in front of the loading area.

The coupling device may comprise a deformable material.

The coupling device may comprise a bearing arrangement.

The coupling device may comprise an electronically controllable actuator.

The electronically controllable actuator may be configured to control rotation of the front part with respect to the rear part in dependence on a speed of the tricycle.

The loading area may comprise a loading platform comprising sheet metal.

The loading platform may be coupled to at least one of the rear wheels by a kneeling joint which allows the loading platform to be lowered.

The tricycle may comprise a third motor for driving the front wheel.

The tricycle may comprise an electronic drive unit for at least one of the first and second motor.

The tricycle may comprise a steering angle sensor and/or a speed sensor and the drive unit may be configured to control at least one of the first and the second motors in dependence on measurements received from the steering angle sensor and/or the speed sensor. Particular and preferred aspects of the invention are set out in the accompanying independent and dependent claims. Features from the dependent claims may be combined with features of the independent claims and with features of other dependent claims as appropriate and not merely as explicitly set out in the claims.

### Brief description of the drawings

Further features of the present invention will become apparent from the examples and figures, wherein:
Figure 1a is a side view of a tricycle according to embodiments of the present invention;
Figure 1b is a front perspective view of a tricycle according to embodiments of the present invention;
Figures 2a and 2b are side views of a tricycle according to embodiments of the present invention in a driving configuration;
Figure 2c is a rear perspective view of a tricycle according to embodiments of the present invention in the driving configuration;
Figures 3a and 3b are side views of a tricycle according to embodiments of the present invention in a loading configuration;
Figure 3c is a rear perspective view of a tricycle according to embodiments of the present invention in the loading configuration;
Figures 4a to 4d illustrate the operation of part of a kneeling system which can be comprised in a tricycle according to embodiments of the present invention.

### Detailed description of certain embodiments

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated. The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B. Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein. Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein. In the drawings, like reference numerals indicate like features; and, a reference numeral appearing in more than one figure refers to the same element.

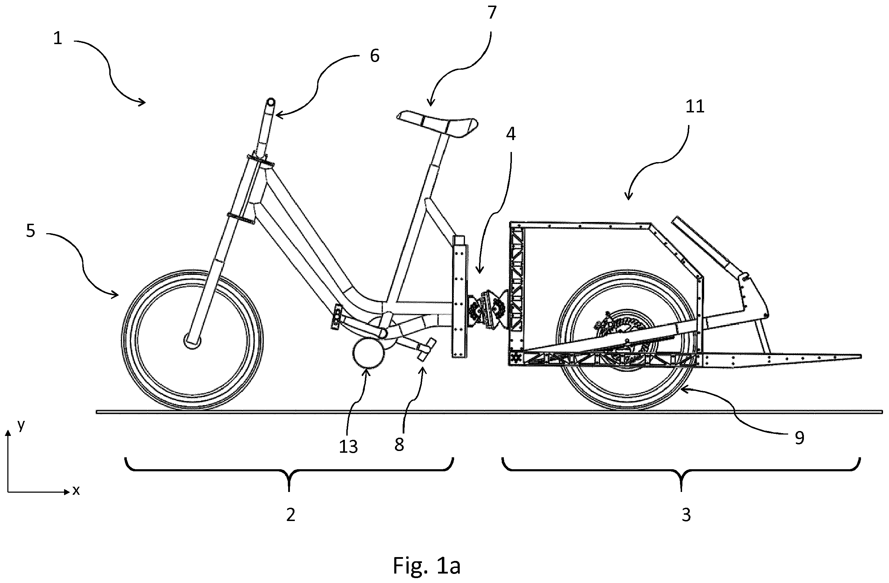

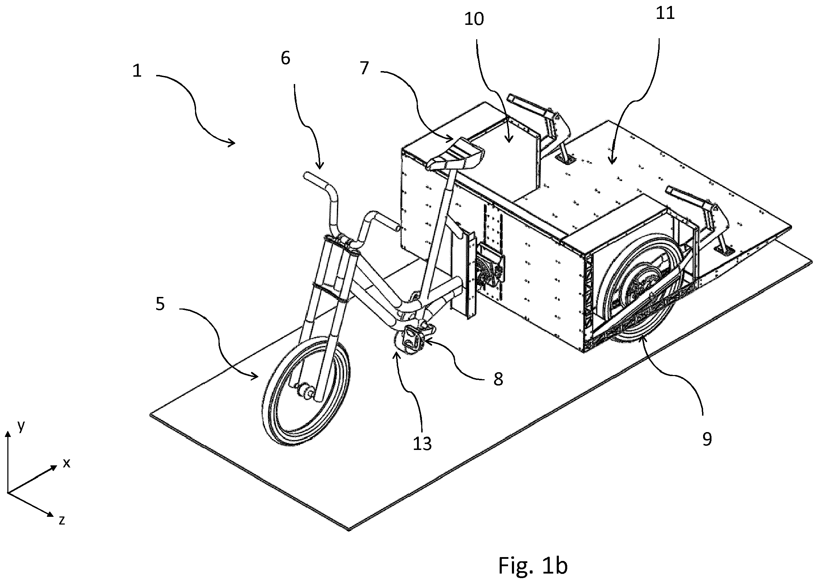

Referring to Figures 1a and 1b, an electric tricycle 1 according to embodiments of the present invention comprises a front section 2, a rear section 3, and a coupling device 4. The coupling device couples the front section 2 to the rear section 3 and allows rotation of the front section 2 relative to the rear section 3.

The front section 2 comprises a steerable front wheel 5, handlebars 6 for steering the front wheel 5, and a seat 7. In use, the rider sits on the seat 7 and steers the tricycle 1 using the handlebars 6. The front section 2 also comprises pedals 8.

The rear section 3 comprises a first rear wheel 9, a second rear wheel 10, and a loading area 11 between the first and second rear wheels 9, 10. The loading area 11 is at least partially supported by the first and second rear wheels 9, 10. The rear section further comprises a first motor (not shown) for driving the first rear wheel 9 and a second motor (not shown) for driving the second rear wheel 10.

The coupling device 4 allows the front part 2 of the tricycle 1 to rotate relative to the rear part 3, for example when turning a corner. This provides increased stability to the tricycle 1. The coupling device 4 preferably allows rotation about an axis which is inclined with respect to a surface (the x-z plane in the Figures) on which the tricycle 1 stands. Put differently, if the first part 2 and the second part 3 are considered to be spaced apart in a first direction by the coupling device 4, seen as the y direction in the Figures, then preferably the axis about which the front part 2 can rotate is not strictly parallel to the first direction. This provides further stability for the tricycle 1: when parked, the front part is prevented from rotating.

Further stability when cornering is provided by the separate motors in the first and second rear wheels 9, 10, which allow the rear wheels to be driven at different speeds, thus compensating for the difference in distance travelled by each rear wheel on a curve. By providing the motors in the rear part 3 of the tricycle 1, a chain or belt is not required for coupling the pedals to the rear wheels, and the problem of such a chain or belt being twisted on rotation of the front part 2 is avoided.

The motors can be of any suitable type. Preferably the motors are built in to the rear wheels 9, 10, as this allows more space for the loading area 11 between the rear wheels. The motors are preferably brushless direct drive motors. The number of poles and the diameter of the motor can be chosen to obtain a required power and maximum speed. For example, a 20" wheel rim can be used in combination with a 7" direct drive motor having 22 pole pairs and a supply voltage of 24 to 48 volts. The motor speed depends on the supply current. The total width of such a motor can be as small as 3" or 4".

In some embodiments, one or both of the rear wheel motors is mounted on the rear part 3 and is connected to the respective rear wheel by a chain or belt. Such a separated motor can have a diameter as small as 1" and a length of 10" to 15", thus allowing it to be built in underneath the loading area 11.

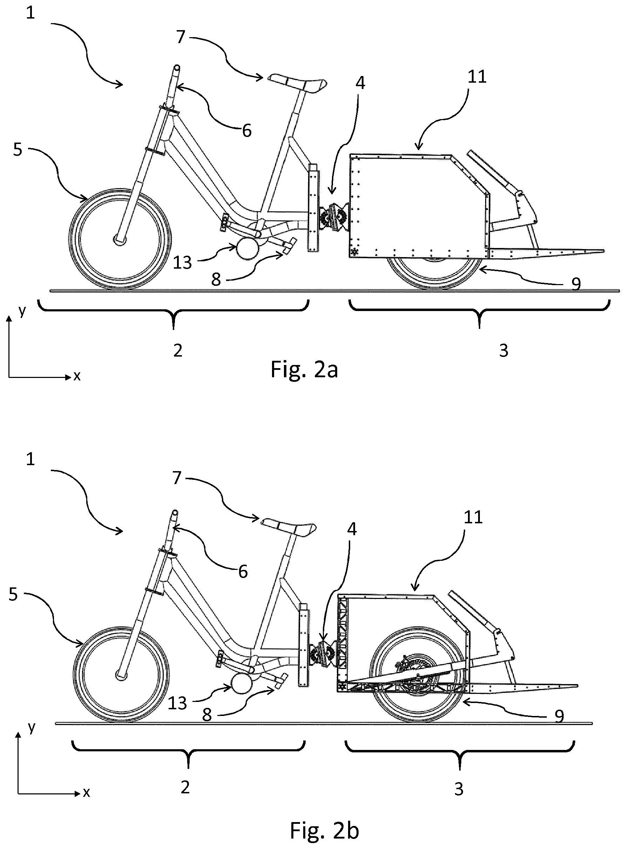

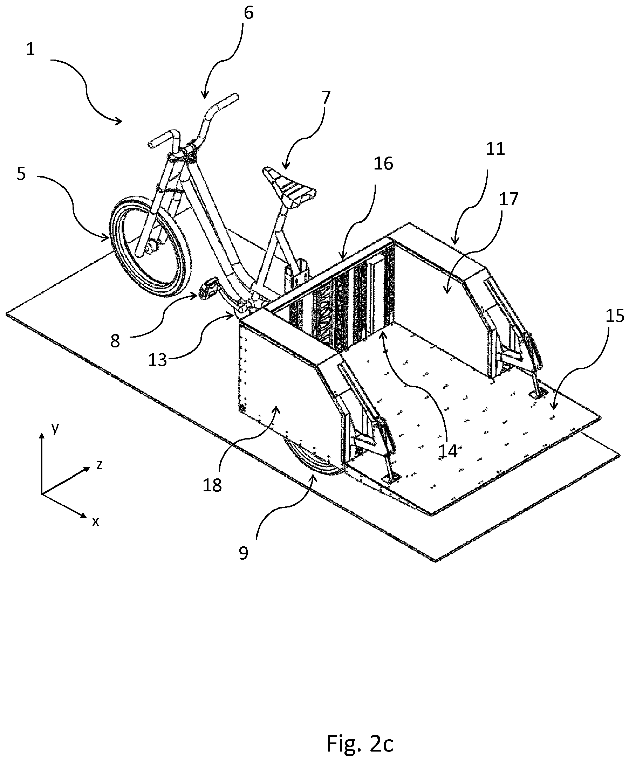

In some embodiments, the tricycle 1 comprises a generator 13 which is coupled to the pedals 8. The generator 13 is configured to generate power when the pedals are actuated. The generator 13 may be connected to a battery 14 (Figure 2c) stored in the rear part 3 and the battery 14 may be connected to at least one of the first motor and the second motor. Thus the generated power can be transferred to the battery 14 for supplying power to one or more of the rear wheel motors. The generator 13 may alternatively be directly connected to at least one of the first motor and the second motor. The generator 13 may alternatively be directly connected to both the battery 14 and at least one of the first motor and the second motor.

Connections between elements disposed on the front part 2 of the tricycle 1, such as the generator 13, and elements disposed on the rear part 3 of the tricycle 1, such as the battery 14 and motors, can be achieved using wires for transferring electrical power and/or signals, or can be achieved using a wireless connection. The wires can be provided in various configurations. For example, if the rotation of the hinge is limited to 90° or less in each direction (that is, a full range of motion of 180° or less), a wire for connecting the generator to the battery can be routed around the exterior of the coupling device 4. In alternative embodiments, a wire for connecting the generator to the battery can be routed at least partially internally through the coupling device 4. For example, if the coupling device 4 comprises a bearing arrangement, the wire can be routed through a hollow part in the axis of the bearing. If the coupling device 4 comprises a rubber hinge, the wire can be routed through a hole in the hinge.

The tricycle 1 preferably comprises sensors and a rear wheel motor control unit for receiving measurements from the sensors and controlling the rear wheel motors in dependence on the received measurements. The rear wheel motor control unit, also referred to as an electronic drive unit, is preferably mounted on the rear part of the tricycle 1. In embodiments wherein the loading area comprises a riveted sheet metal platform arranged in a sandwich structure, the rear wheel motor control unit can be located inside the sandwich structure. The tricycle 1 optionally comprises a display panel (not shown) located on the handlebars 6 for displaying a current speed of the tricycle to the user.

The sensors may comprise one or more of: a sensor for measuring the steering angle, or angle of rotation, of the handlebars, for example an angular displacement sensor or a linear displacement sensor mounted on the front part 2; a sensor for measuring the position of brake handles attached to the handlebars, for example a linear displacement sensor mounted in or near to the brake handles; a sensor for measuring the actual speed of the tricycle 1; a throttle sensor mounted on the handlebars or the pedal axis for providing an input for the user to control the speed. For example, in some embodiments the rear wheel motor control unit is configured to receive measurements of the angle of rotation of the handlebars and the speed of the tricycle and to determine an optimal speed difference between the rear wheels for stability when steering a curve. For example, in some embodiments the rear wheel motor control unit is configured to receive measurements of the angle of rotation of the handlebars and the speed of the tricycle and to determine an optimal speed difference between the rear wheels for stability when steering a curve. The rear wheel motor control unit may use the received sensor measurements to generate a setpoint for the first and second motors, for example a current, voltage, torque, or speed setpoint. The setpoint may provide a braking effect and in some embodiments the braking effect acts as a parking brake; in some embodiments the braking energy is at least partially stored in the battery.

The coupling device 4 may comprise a hinge made of a deformable material such as rubber. The hinge is preferably shaped, located and oriented so as to provide a desired relationship between the torque applied at the hinge and the rotation allowed by the hinge on application of the torque. In parking position without a cyclist on the front part of the tricycle, the torque acting on the front part is very limited and is compensated by the resistance to deformation of the hinge material. When driving on a straight line, there is minimal torque tilting the front part of the tricycle since the cyclist is balancing the front part. As in a conventional cycle, the balancing becomes easier at higher speed and depends on the location and orientation of the hinge. If the axis of rotation of the hinge intersects with or comes close to the contact point of the front wheel and the ground, balancing strongly depends on the skills of the cyclist. If the axis of rotation of the hinge crosses the ground in front of the contact point of the front wheel, the tricycle is self-balancing. In one embodiment of this invention, the location and orientation of the hinge can be adjusted, thus allowing the user to optimize behaviour when driving on curves and driving on straight lines.

The coupling device 4 may comprise a bearing arrangement. For example, the bearing arrangement may comprise a pin attached to the front part 2 of the tricycle 1 and a housing attached to the rear part 3 of the tricycle 1 which receives the pin. The pin can rotate within the housing, thus allowing rotation of the front part 2 of the tricycle with respect to the rear part 3. Alternatively, the pin may be attached to the rear part 3 and the housing to the front part 2. The pin and housing are preferably oriented with their longitudinal axis inclined with respect to the plane of the surface on which the tricycle stands. Preferably the bearing arrangement comprises a rotary table bearing. In some embodiments the bearing arrangement comprises two individual bearings mounted in the housing and on the pin with a separation of the order of the total diameter of both bearings. Both bearings are substantially resistant to radial forces and at least one bearing is substantially resistant to axial forces. In another embodiment the bearing arrangement comprises a single bearing such as a rotary table bearing. The length of such a bearing arrangement can be as short as 40 mm, thus reducing the overall length of the hinge and the entire tri-cycle.

The coupling device 4 may comprise an electronically controlled coupling device such as a controlled rotational brake and a controller for the electronically controlled coupling device. The controller of the electronically controlled coupling device is configured to control the torque required to rotate the front part relative to the rear part of the tricycle, depending on one or more parameters such as the current relative position, steering angle, speed.

In a particular embodiment of such an electronically controlled coupling device, the coupling device is configured to rigidly couple the front and rear part of the tricycle when in a parking position. Both parts can rotate freely about the axis of rotation in all other positions. In a preferred variant of such an embodiment, the rigid coupling in parking position is maintained if the power supply is switched off. The tricycle may comprise sensors and a coupling device control unit for receiving measurements from sensors and controlling the coupling device in dependence upon the received sensor measurements. The sensors preferably comprise the same sensors as described hereinbefore with respect to the rear wheel motor control unit. In some embodiments, the coupling device control unit is also configured to control the rear wheel motors. In some embodiments, separate control units are provided for controlling the coupling device and the rear wheel motors. The separate control units can be stored in a single box or in separate boxes, for example within a sandwich structure of a loading platform forming part of the loading area.

To avoid idle movement of the pedals, the generator 13 can be used to generate a torque opposite to the sense of rotation of the pedals. Power generated by this generator can be used for batteries, one or more of the first, second, and optional third motors or other tricycle parts that use an electric power supply. The opposing torque can be controlled by a control system. In a preferred embodiment the cyclist can select both the pedaling speed and the opposing torque independent of the actual driving speed, the cargo weight, slope or other parameters, thus allowing comfortable pedaling. In a particular embodiment power generated by pedaling the generator can be used to drive one or more of the first, second, and optionally third motors directly in case of empty or defective batteries.

In another embodiment idle movement of the pedals can be avoided by a brake system that provides a torque opposite to the sense of rotation of the pedals.

In a particular embodiment pedalling parameters can be measured and used in the control unit to reduce or even switch off motor power as may be imposed by local legislation or practices. Pedalling parameters can include one or more of pedalling speed, actual torque generated by each pedal or both pedals, torque change generated by each pedal or both pedals, torque in the front-most pedal position. Other pedalling parameters can be used as required.

In some embodiments the tricycle comprises a third motor for driving the front wheel. In a preferred embodiment this third motor is a wheel motor. The control unit of this motor can be coupled to the control unit of the rear wheel motors.

The loading area 11 preferably comprises a loading platform 12. The loading platform is preferably made of a lightweight material, for example sheet metal riveted to form a sandwich structure which provides a stiff and light platform. The platform 12 is at least partially supported by the rear wheels 9, 10.

Referring to Figure 2c, in a preferred embodiment the loading platform 12 comprises a floor 15, a front wall 16 being proximal to the front part 2 of the tricycle, and two sidewalls 17, 18. The floor is rigidly connected to the front wall and sidewalls. In some embodiments, the floor and one or more of the walls are formed by a single sheet. The floor and walls can be built as sandwich structures, meaning that they comprise two metal coversheets spaced apart by other U- or S-shaped transverse sheets. Holes in the transverse sheets allow secure mounting of power and signal cables. Batteries and control units are preferably mounted in compartments between the cover sheets in the front wall or the floor, as can be seen for example in Figure 2c. The wheels, in some embodiments carrying wheel motors, are mounted in between the cover sheets of the side walls. Local reinforcements of the cover sheets near the fixation points of the wheel pins may be used. Thus the loading platform is at least partially supported by the rear wheels.

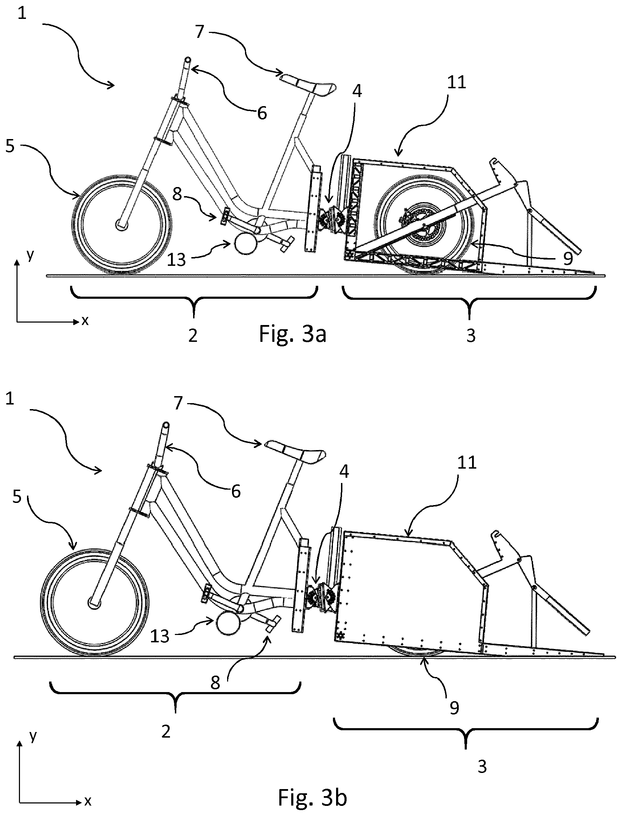

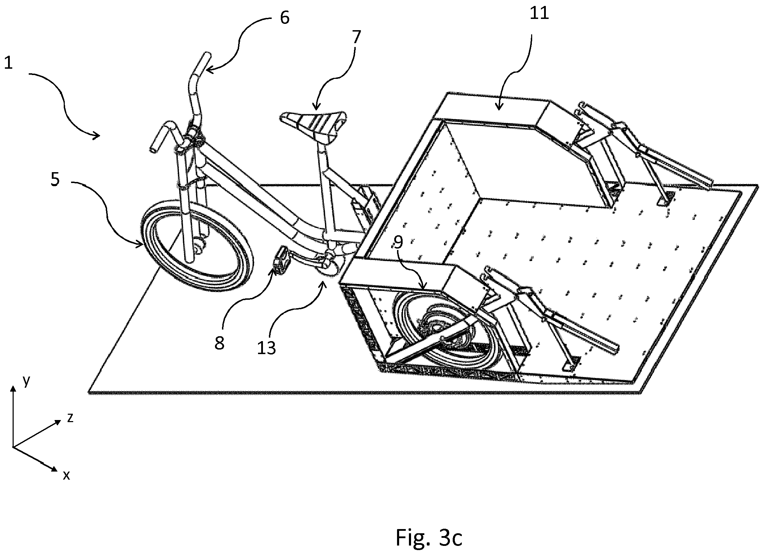

The loading platform 12 has a driving configuration, as shown in Figures 2a to 2c, and a loading configuration, as shown in Figures 3a to 3c. In the driving configuration, the platform is substantially parallel to the surface on which the tricycle stands. In the loading configuration, the platform is inclined with respect to the surface so as to form a ramp allowing easy loading of cargo onto the platform.

The lowering of the platform can be achieved by using a kneeling system which allows the floor of the loading platform to be lowered closer to the ground or even so that it is in contact with the ground. In a preferred embodiment the thickness of the floor at the rear of the loading platform (that is, the opposite end to the front wall) is limited to 2 cm or less, thus allowing to drive a small cart on the loading platform or to load boxes using a small chariot.

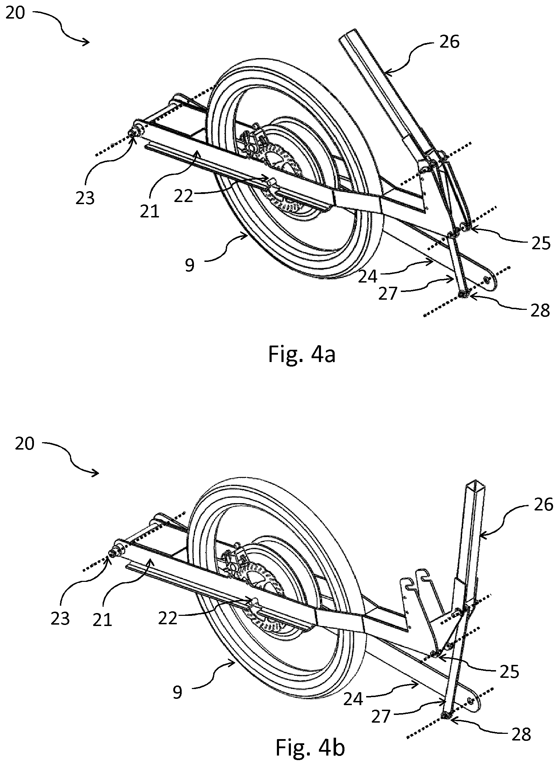

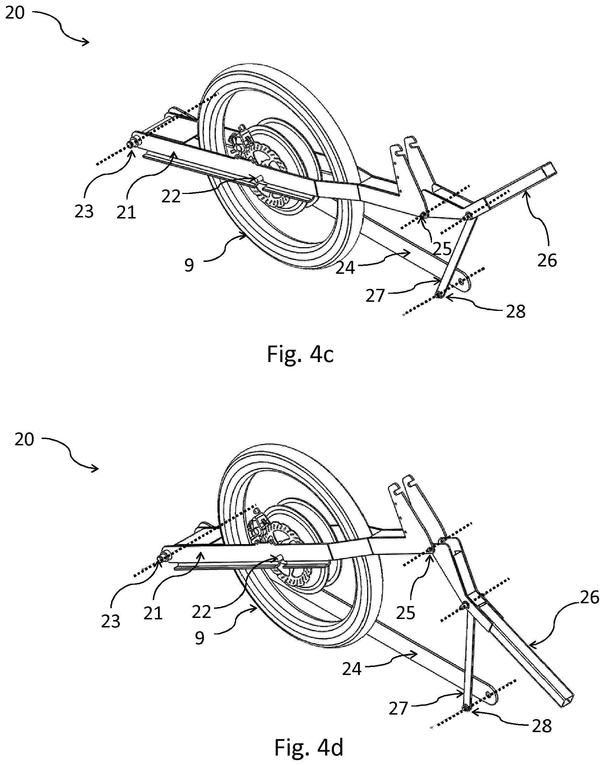

The kneeling system is mounted between the coversheets of a sidewall of the loading platform. Referring to Figures 4a to 4d, the kneeling system 20 comprises two parallel bars that support the pin of the closest rear wheel. The Figures are labelled with respect to a parallel bar 21 supporting the pin 22 of the first rear wheel 9, but it will be understood that the same configuration is used for the second rear wheel 10. One end of the bar 21 is fixed to a first hinge 23 which is connected to the loading platform 12 via a bar 24. The other end of the bar 21 supports a second hinge 25 that is connected to a lever arm 26. This lever arm 26 is connected to the floor of the loading platform 12 via a coupling arm 27 and a third hinge 28. By lifting up the lever arm 26, the floor of the loading platform 12 is lifted up. By choosing appropriate lever arm lengths, the manual force on the lever can be multiplied and allows to lift up a loading platform of over 250kg.

Various modifications to the embodiments described herein are possible within the scope of the present invention.

For example, the tricycle need not comprise handlebars and may instead comprise an alternative means for steering the front wheel. For example, instead of handlebars, a joystick may be used for steering the front wheel.

Where the motors are built-in, the tricycle may comprise a motor cover for each motor which directly supports a rim of each wheel, thus eliminating the need for wheel spokes.

The tricycle need not comprise pedals and the front section may instead comprise a pair of foot rests on which the user can place their feet for support whilst riding the tricycle. A battery may be comprised in such a tricycle which is coupled to at least one of the rear wheel motors and the front motor. The tricycle without pedals may not include a generator.

## Claims

1. An electric tricycle comprising a front section, a rear section, and a coupling device, the front section comprising a steerable front wheel, and a seat, and the rear section comprising a loading area and first and second rear wheels at least partially supporting the loading area;
wherein the coupling device couples the front section to the rear section and allows rotation of the front section relative to the rear section;
and wherein the rear section comprises a first motor for driving the first rear wheel and a second, different motor for driving the second rear wheel.

2. A tricycle according to claim 1, wherein the front section comprises a set of pedals.

3. A tricycle according to claim 2, comprising a generator coupled to the pedals and to at least a battery and/or one of the first motor and the second motor.

4. A tricycle according to any preceding claim, wherein the front section and the rear section are spaced apart by the coupling device in a first direction and wherein the axis about which the front section can rotate is inclined with respect to the first direction.

5. A tricycle according to any preceding claim, wherein the first and second motors are built into the first and second rear wheels respectively.

6. A tricycle according to any of claims 1 to 4, wherein the first and second motors are disposed under or in front of the loading area.

7. A tricycle according to any preceding claim, wherein the coupling device comprises a deformable material.

8. A tricycle according to any of claims 1 to 6, wherein the coupling device comprises a bearing arrangement.

9. A tricycle according to any of claims 1 to 6 wherein the coupling device comprises an electronically controllable actuator.

10. A tricycle according to claim 9, wherein the electronically controllable actuator is configured to control rotation of the front part with respect to the rear part in dependence on a speed of the tricycle.

11. A tricycle according to any preceding claim, wherein the loading area comprises a loading platform comprising sheet metal.

12. A tricycle according to claim 11 wherein the loading platform is coupled to at least one of the rear wheels by a kneeling joint which allows the loading platform to be lowered.

13. A tricycle according to any preceding claim comprising a third motor for driving the front wheel.

14. A tricycle according to any preceding claim comprising an electronic drive unit for at least one of the first and second motor.

15. A tricycle according to claim 14, wherein the tricycle comprises a steering angle sensor and/or a speed sensor and the drive unit is configured to control at least one of the first and the second motors in dependence on measurements received from the steering angle sensor and/or the speed sensor.
